# DEMANDE DE BREVET EUROPEEN

(11) **EP 0 532 392 A1**
(43) Date de publication de la demande: **17.03.1993**
(21) Numéro de dépôt: 92402416.9
(22) Date de dépôt: 04.09.1992
(51) Int. Cl.: F16B 41/00

(54) **Dispositif de guidage et de maintien d'une vis imperdable dans un système d'assemblage**

(30) Priorité: 13.09.1991 FR 9111313
(71) Demandeur: THOMSON-CSF, 75008 Paris (FR)
(72) Inventeur: Auffret, Dominique, F-92045 Paris la Défense (FR); David, Jean-Pierre, F-92045 Paris la Défense (FR); Julien, Jean, F-92045 Paris la Défense (FR)
(74) Mandataire: Benoit, Monique

(57) **Abrégé**

Dispositif de guidage et de maintien d'une vis imperdable dans un système d'assemblage d'au moins une partie fixe (2) et d'une partie mobile (1). Un fourreau (4) est engagé autour de la vis imperdable (3) de telle façon que lorsque la vis (3) est en position devisée, le fourreau (4) sont coincé entre la partie mobile (1) et la vis imperdable (3) pour maintenir celle-ci prisonnière de la partie mobile (1) et cela au moins jusqu'à ce que la vis imperdable (3) soit engagée dans le trou taraudé correspondant (9) de la partie fixe (2). Lors de l'engagement de la vis imperdable (3) dans le trous taraudé (9) l'axe (10) de la vis imperdable (3) se confond automatiquement avec l'axe (11) du trou taraudé (9).

Application à tous les système d'assemblage mécanique.

## Description

La présente invention concerne un dispositif de guidage et de maintien d'une vis imperdable dans un système d'assemblage. Elle s'applique par exemple aux systèmes d'assemblage mécanique à charnière ou à axe de rotation. Plus généralement, son application concerne un large éventail de montages mécaniques et répond notamment à tous les assemblages de pièces dont l'une est articulée ou en déplacement par rapport à l'autre.

Il existe différents dispositifs de vis imperdable, mais avec un jeu au niveau du trou de passage de la vis qui fournit une localisation approximative de la vis par rapport au trou taraudé. Ainsi, par exemple, lors d'un montage à charnière, au moment de la fermeture du capot, la vis soumise à son poids, se présente en biais et vient buter hors du trou taraudé. Il s'ensuit un risque de détérioriation prématurée du filetage du trou taraudé ou de la vis dès l'engagement de cette dernière. En fait, dans de nombreuses applications, les dispositifs actuels évitent difficilement que la vis ne se torde ou que le taraudage du trou ne se détériore, notamment lors de la présentation de la vis, quand l'axe de celle-ci ne se confond pas avec l'axe du trou taraudé. Par ailleurs, les systèmes actuels de vis imperdable sont complexes et onéreux.

Le but de l'invention est de pallier les inconvénients précité.

A cet effet, l'invention a pour objet, un dispositif de guidage et de maintien d'une vis imperdable dans un système d'assemblage d'au moins une partie fixe et d'une partie mobile, la vis imperdable étant solidaire de la partie mobile, caractérisé en ce qu'un fourreau est engagé autour de la vis imperdable de telle façon que lorsque la vis est en position dévissée, le fourreau soit coincé entre la partie mobile et la vis imperdable grâce à un jeu prévu à cet effet pour maintenir celle-ci prisonnière de la partie mobile et cela au moins jusqu'à ce que la vis imperdable soit engagée dans le trou taraudé correspondant de la partie fixe, et de telle façon que lors de l'engagement de la vis imperdable dans le trou taraudé, l'axe de la vis imperdable se confonde automatiquement avec l'axe du trou taraudé.

L'invention a pour principaux avantages qu'elle permet le guidage d'une vis imperdable dans un assemblage de pièces situées de façon quelconque dans l'espace, qu'elle permet le positionnement parfaitement perpendiculaire et automatique de l'axe de la vis par rapport au trou taraudé lors de l'assemblage, qu'elle maintient la vis en position dévissée malgré son poids lors de la manoeuvre des pièces, enfin qu'elle permet à la vis d'être imperdable d'une façon simple et économique.

D'autres caractéristiques et avantages de l'invention apparaîtront à l'aide de la description qui suit faite en regard des dessins annexés qui représentent :
- la figure 1a, une vis imperdable en position vissée selon l'invention ;
- la figure 1b, une vis imperdable en position devisée selon l'invention ;
- la figure 2a, un positionnement possible du fourreau dans la partie mobile ;
- la figure 2b, une vis imperdable maintenue dans la partie mobile selon l'invention.

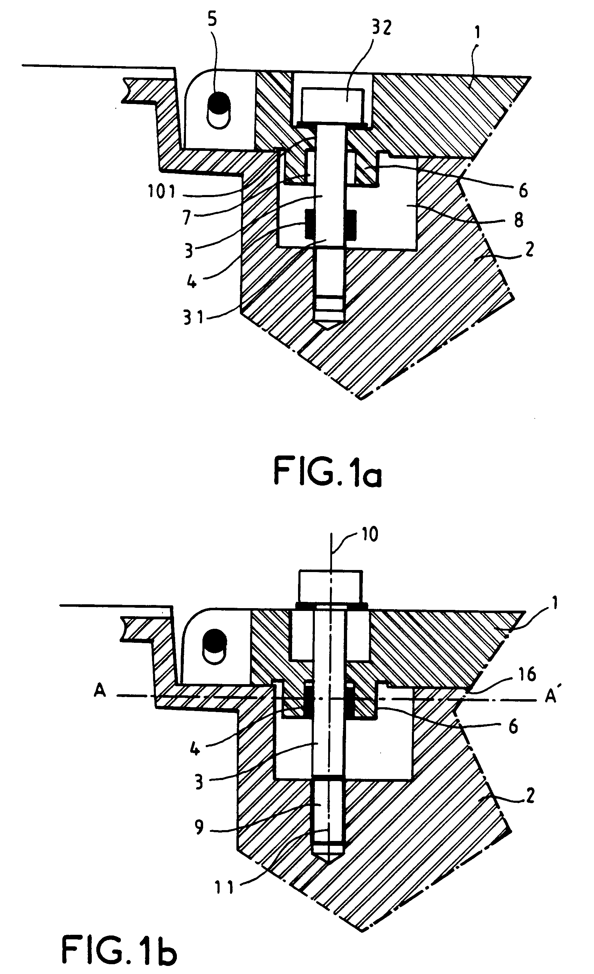

La vis qui est représentée avec la référence 3 sur les figures 1a et 1b assure la fixation d'une partie mobile 1 sur une partie fixe 2.

Elle est rendue imperdable par un fourreau 4 entourant tout ou partie du corps 31 de la vis 3.

La fixation de la pièce mobile 1 sur la partie fixe 2 est réalisée classiquement par engagement du corps 31 dans un trou 101 traversant la partie mobile 1 et par vissage de la partie filetée de la vis 3 dans un trou 9 taraudé à l'intérieur de la partie fixe 2. L'immobilisation de la partie mobile 1 sur la partie fixe 2 est obtenue lorsqu'a la fin du vissage, la tête de vis 32 de la vis 3 est bloquée en rotation sur la partie mobile 1. Un lamage 7 est pratiqué autour du trou 101 de passage de la vis 3 dans la partie mobile 2 pour permettre l'engagement du fourreau 4 dans le lamage 7 lors du dévissage de la vis 3 de la partie fixe 2 et le guidage de la vis 7 dans l'axe du trou 101 lors de son vissage.

Cette disposition a pour avantage qu'elle permet un positionnement automatique de l'extrémité de la vis 3 au-dessus du trou 9 lorsqu'au moment de la fixation de la partie mobile 1 sur la partie fixe 2 les trous 101 et 9 sont placés directement en regard l'un de l'autre.

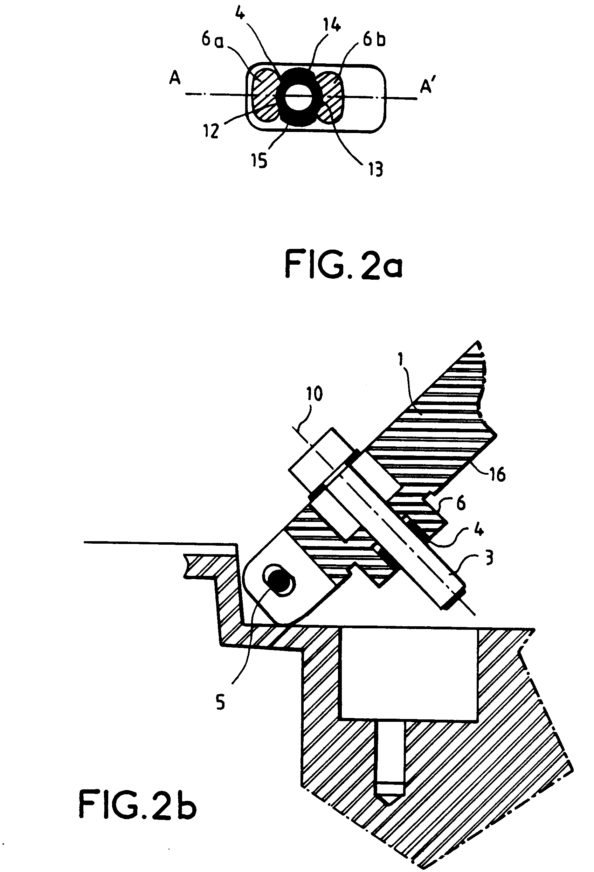

Cette mise en correspondance des trous 101 et 9 peut être assurée par tout moyen en particulier suivant le montage présenté sur les figures 1a, 1b, et 2b.

La figure 1a présente une coupe d'un assemblage à charnière où une partie mobile 1 est jointe à une partie fixe 2, la vis imperdable 3 maintenant ces deux parties jointes est en position vissée.

Selon l'invention, un fourreau 4 est engagé autour de la vis 3. Le fourreau 4 peut être par exemple en caoutchouc ou en toute autre matière synthétique ayant un coefficient de frottement supérieur à ceux des matériaux des pièces à assembler. Il faut par ailleurs que le diamètre nominal à l'intérieur du fourreau 4 soit inférieur au diamètre nominal de la vis 3.

La partie mobile 1 s'articule par rapport à la partie fixe 2 autour d'un point d'articulation 5. A la base de la partie mobile 1, en regard de la partie fixe 2, un bossage 6 entoure la vis vis 3.

Suivant les applications et l'épaisseur de la partie mobile 1, le bossage peut être remplacé par exemple par un lamage à l'intérieur de la partie mobile 1 comme cela a été indiqué précédemment.

La hauteur de ce bossage 6 ou du lamage peut être par exemple légèrement supérieure à la largeur du fourreau 4. Un jeu 7 entre le bossage 6 et la vis 3 est prévue lorsque la vis est en position dévissée, ce jeu 7 est destiné à accueillir le fourreau 4. Un alésage 8 effectué dans la partie fixe 3 permet l'engagement du bossage dans celle-ci ainsi que la course du fourreau 4 engagée autour de la vis 3 lors des opérations de vissage ou de dévissage de celle-ci. Dans les cas sans bossage, le jeu 7 est en fait un lamage effectué dans la partie mobile 1.

La figure 1b, présente une coupe du même assemblage de la figure 1a où les deux parties 1 et 2 sont toujours jointes, mais dans ce cas, la vis est en position dévissée, prête néanmoins à être engagée dans le trou taraudé 9 de la partie fixe 2. Dans cette position, le fourreau 4 est coincé entre le bossage 6 et la vis 3.

Le jeu 7 et l'épaisseur du fourreau 4 sont tels que lors de l'opération de dévissage, le fourreau 4 s'engage aisément dans le jeu 7 compris entre le bossage 6 et la vis 3.

Le fourreau 4 permet l'immobilisation dans la partie mobile 1 de la vis 3 lorsque celle-ci est en position dévissée tout en maintenant automatiquement l'axe 10 de la vis 3 confondu avec l'axe 11 du trou taraudé 9 de la partie fixe 2.

Le résultat est obtenu par le gonflement du fourreau 4 lors d'une opération de vissage ou de dévissage qui maintien l'axe de la vis 3 parfaitement perpendiculaire par rapport au plan 16 de la partie mobile 1. En effet, le filetage de la vis 3 occasionne une déformation de la paroi interne du fourreau 4 qui se traduit par un gonflement de sa paroi externe. Celle-ci étant en contact entièrement ou en partie avec le conduit interne du bossage 6, il en résulte que la pression uniforme ainsi exercée sur les parois externes du fourreau 4 positionne l'axe de la vis 3 parfaitement perpendiculaire par rapport au plan 16 de la partie mobile 1.

La figure 2a présent en une coupe qui indique le positionnement du fourreau 4 dans le bossage 6 et une forme possible de celui-ci.

L'axe AA′ est l'axe AA′ représenté sur la figure 1b. Le bossage 6 est constitué de deux parties 6a et 6b concentriques positionnées symétriquement par rapport à l'axe de la vis 3 et à l'axe AA′. Ces deux parties 6a et 6b n'entourent pas complètement la vis 3.

Cette forme permet de réduire d'une part l'encombrement du dispositif et d'autre part le guidage et le maintien de la vis 3, néanmoins, elle n'est pas nécessaire à la mise en oeuvre de l'invention.

Le fourreau 4 doit avoir un coefficient de frottement supérieur au matériau de la partie mobile 1 pour permettre une immobilisation efficace de la vis 3 dans la partie mobile. Dans le cas de la forme du bossage indiquée par la figure 2a, le fourreau subit un renflement au niveau de ses parties 14 et 15 et est comprimé au niveau de ses parties 12 et 13 en contact avec le bossage 6. Cette solution améliore le guidage et la maintien de la vis perpendiculairement au plan 16 de la partie mobile 1 comme le montre la figure 2b. Cette figure présente la partie mobile 1 disjointe de la partie fixe 2 et s'articulant autour du point d'articulation 5. Le fourreau 4 coincé entre la vis 3 et le bossage 6 comme indiqué sur la figure 2a maintient la vis prisonnière de la partie mobile 1 et l'axe 10 de la vis 3 parfaitement perpendiculaire par rapport à la base 16 de la partie mobile 1.

Il n'et pas nécessaire que le bossage 6 ait la forme indiquée par la figure 2a, il peut par exemple entourer complètement la vis, le bossage 6 peut par ailleurs être remplacé par un lamage à l'intérieur de la partie mobile 1 par exemple si l'épaisseur de celle-ci le permet. La forme de bossage indiquée par la figure 2a a seulement pour but d'amélioration le guidage et le maintien de la vis 3. Par ailleurs l'apparition du gonflement précité du fourreau 4 lors des opérations de dévissage se traduit par un changement du couple de serrage au niveau de la vis 3, or ce gonflement disparaît dès que la vis 3 se désengage du trou taraudé 9 de la partie fixe 2, ce qui permet à l'utilisateur de connaître la fin de la phase de dévissage.

L'exemple de réalisation présenté ici montre un système d'assemblage à charnière. Il est possible d'appliquer l'invention à d'autres types d'assemblage, en particulier, la partie mobile peut être complètement désolidarisée de la partie fixe.

## Revendications

1. Dispositif de guidage et de maintien d'une vis imperdable (3) dans un système d'assemblage d'au moins une partie fixe (2) et d'une partie mobile (1), la vis imperdable (3) étant solidaire de la partie mobile (1), caractérisé en ce qu'un fourreau (4) est engagé autour de la vis imperdable (3) de telle façon que lorsque la vis (3) est en position dévissée, le fourreau (4) soit coincé entre la partie mobile (1) et la vis imperdable (3) grâce à un jeu (7) prévu à cet effet au moins jusqu'à ce que la vis imperdable (3) soit engagée dans le trou taraudé (9) correspondant de la partie fixe (2), et de telle façon que lors de l'engagement de la vis imperdable (3) dans le trou taraudé (9) l'axe (10) de la vis imperdable (3) se confonde automatiquement avec l'axe (11) du trou taraudé (9).

2. Dispositif selon la revendication 1, caractérisé en ce que le fourreau (4) est en matière synthétique ayant un coefficient de frottement supérieur à ceux des matériaux des pièces à assembler.

3. Dispositif selon les revendications 1 et 2, caractérisé en ce que le fourreau (4) est en caoutchouc.

4. Dispositif selon l'une quelconque des revendications précédente caractérisé en ce que le diamètre nominal à l'intérieur du fourreau (4) est inférieur au diamètre nominal de la vis imperdable (3).

5. Dispositif selon l'une quelconque des revendications précédentes, caractérisé en ce qu'un bossage (6) entoure la vis imperdable (3) à la base (16) de la partie mobile (1), un jeu (7) existant entre le bossage (6) et la vis imperdable (3) afin d'accueillir le fourreau (4) engagé autour de la vis imperdable (3).

6. Dispositif selon la revendication 5, caractérisé en ce que la hauteur du bossage (6) est au moins égale à la longueur du fourreau (4).

7. Dispositif selon l'une quelconque des revendications précédentes, caractérisé en ce que le bossage (6) est constitué de deux parties concentriques (6a, 6b) disposées de façon symétrique par rapport à l'axe de la vis imperdable (3) et n'entourant pas complètement la vis imperdable (3).

8. Dispositif selon l'une quelconque des revendications 1 à 4, caractérisé en ce qu'un lamage intérieur à la partie mobile (1) et effectué à la base (16) de cette partie mobile (1) entoure la vis imperdable (3), un jeu existant entre la paroi de la partie mobile (1) et la vis imperdable (3) afin d'accueillir le fourreau (4) engagé autour de la vis imperdable (3).

9. Dispositif selon l'une quelconque des revendications précédentes, caractérisé en ce que le couple de serrage de la vis imperdable (3) se modifie dès que la vis imperdable (3) est désengagée du trou taraudé (9) de la partie fixe (2).
